# FASCICULE DE BREVET EUROPEEN

(11) **EP 2 191 527 B1**
(45) Date de publication et mention de la délivrance du brevet: **15.05.2013**
(21) Numéro de dépôt: 08838360.9
(22) Date de dépôt: 12.09.2008
(51) Int. Cl.: H01M 4/86, H01M 4/88, H01M 4/90, H01M 8/12, H01M 4/02

(54) **POUDRE A GRAINS ALLONGES ET SON UTILISATION POUR LA FABRICATION D'UNE ELECTRODE POUR PILE A COMBUSTIBLE A OXYDE SOLIDE**
PULVER MIT VERLÄNGERTEN KÖRNERN UND SEINE VERWENDUNG ZUR HERSTELLUNG EINER ELEKTRODE FÜR EINE FESTOXIDBRENNSTOFFZELLE
POWDER CONTAINING ELONGATED GRAINS AND THE USE THEREOF FOR PRODUCING AN ELECTRODE FOR A SOLID OXIDE FUEL CELL

(30) Priorité: 14.09.2007 FR 0757565
(43) Date de publication de la demande: 02.06.2010
(73) Titulaire: Saint-Gobain Centre de Recherches et d'Etudes Européen, 92400 Courbevoie (FR)
(72) Inventeur: MARLIN, Samuel, F-13750 Plan D'orgon (FR); LEVY, Caroline, F-34070 Montpellier (FR); MAHONEY, Michael, Holliston, Massachusetts 01746 (US)
(74) Mandataire: Tanty, François
(86) Numéro de dépôt international: PCT/FR2008/051635
(87) Numéro de publication internationale: WO 2009/047421

(56) Documents cités:
- EP-A- 0 545 757
- EP-A- 0 568 281
- EP-A- 0 593 281
- EP-A- 1 598 892
- EP-A- 1 796 191
- WO-A-2004/093235
- US-A1- 2007 082 254

## Description

### Domaine technique

La présente invention se rapporte à une poudre destinée à la fabrication d'un matériau poreux, en particulier pour fabriquer des éléments de pile à combustible à oxyde solide (SOFC), et notamment une électrode d'une telle pile.

### Etat de la technique

Classiquement, la porosité d'un matériau dépend de l'arrangement des grains les uns par rapport aux autres. Elle peut également être augmentée par l'ajout d'agents porogènes qui seront éliminés par traitement thermique, laissant place à des interstices supplémentaires.

Cette élimination des agents porogènes conduit cependant souvent à des défauts rédhibitoires, notamment à des fissures, ou à une dégradation de la maîtrise de la porosité. Des recherches ont donc été entreprises afin d'éviter la mise en oeuvre d'agents porogènes, notamment afin d'optimiser l'arrangement des grains, appelé « compaction ». Ces recherches ont amené au constat et au préjugé technique qu'une augmentation de la porosité entraîne une diminution de la résistance mécanique.

Il existe donc un besoin pour une poudre permettant de limiter la quantité d'agents porogènes, voire de supprimer toute addition d'agents porogènes, tout en améliorant le compromis entre la porosité totale et la résistance mécanique.

Par ailleurs, des piles à combustible ou des matériaux utilisables pour la fabrication de piles à combustibles sont décrites dans WO2004/093235, EP 1 796 191, US 2007/0082254, EP 1 598 892, EP 0 593 281, EP 0 568 281, ou EP 0 545 757. Aucun de ces documents ne décrit, ni ne suggère d'utiliser des grains allongés pour créer de la porosité.

Un but de l'invention est de satisfaire le besoin exprimé ci-dessus.

### Résumé de l'invention

Selon l' invention, on atteint ce but au moyen d'une poudre selon la revendication 1.

Comme on le verra plus en détail dans la suite de la description, une telle poudre, ci-après appelée «poudre à grains allongés », ou «poudre selon l'invention», permet d'obtenir un matériau poreux présentant, à porosité totale comparable, une résistance mécanique très supérieure à celle d'un matériau poreux obtenu à partir d'une poudre ne présentant pas ces caractéristiques.

De préférence, au moins 50%, de préférence au moins 60%, de préférence encore au moins 70% des grains de la poudre, en pourcentages en nombre, présentent un facteur de forme R supérieur à 1,5.

Les grains peuvent notamment être en un matériau choisi parmi les céramiques, les métaux, les cermets et leurs mélanges. Ils peuvent également être en un matériau conducteur électrique ou semi-conducteur.

La poudre selon l'invention est donc parfaitement adaptée à des applications où une porosité totale élevée, par exemple comprise entre 25 et 50 %, et une bonne résistance mécanique sont nécessaires, comme par exemple pour la fabrication d'électrodes de piles de type SOFC.

La poudre selon l'invention peut encore présenter une ou plusieurs des caractéristiques optionnelles suivantes :
- La distribution du facteur de forme R est telle que :
   - moins de 90 %, voire moins de 80 % des grains de la poudre présentent un facteur de forme R supérieur à 1,5, et/ou
   - au moins 10 %, voire au moins 20 % et/ou moins de 60 %, voire moins de 40 % des grains de la poudre présentent un facteur de forme R supérieur à 2, et/ou
   - au moins 5 %, voire au moins 10 % et/ou moins de 40 %, voire moins de 20 % des grains de la poudre présentent un facteur de forme R supérieur à 2,5, et/ou
   - au moins 2 %, voire au moins 5 % et/ou moins de 20 %, voire moins de 10 % des grains de la poudre présentent un facteur de forme R supérieur à 3, les pourcentages étant des pourcentages en nombre.
- D₁₀ est supérieur à 6 microns, voire supérieur à 8 microns, et/ou inférieur à 50 µm, voire inférieur à 30 µm, voire même inférieur à 20 µm. Un percentile D₁₀ d'environ 10 microns est préféré entre tous.
- Le percentile 50, D₅₀, est supérieur à 10 microns, voire supérieur à 20 microns et/ou inférieur à 100 microns, voire inférieur à 50 microns, voire inférieur à 40 µm, voire même inférieur à 30 microns. De préférence, D₅₀ est égal à environ 25 microns.
- Le percentile 90, D₉₀, est supérieur à 30 µm, voire supérieur à 40 µm, et/ou est inférieur à 150 microns, voire inférieur à 100 microns ou même inférieur à 80 microns. De préférence D₉₀ est égal à environ 50 microns.
- Le percentile 99,5, D_{99,5}, également appelé « taille maximale» des grains de la poudre, est inférieur à 200 µm, voire inférieur à 150 µm ou même inférieur à 110 µm. Cette taille maximale est choisie en fonction de l'application.
- Dans des modes de réalisation particulièrement avantageux, la poudre est constituée, pour plus de 95%, voire même plus de 99%, en pourcentages massiques, en une matière choisie parmi :
   o un pérovskite de manganèse,
   o un pérovskite de lanthane,
   o un mélange de pérovskite de manganèse et de pérovskite de lanthane,
   o un pérovskite de lanthane - cobalt (LaCoO₃),
   o un pérovskite de lanthane - fer (lave03),
   o un pérovskite de lanthane - manganèse (LaMₙO₃),
   o un pérovskite de praséodyme - manganèse,
   o un colbatite de samarium dopé au strontium,
   o un nickelate de lanthanides,
   o un mélange de bismuth de ruthénium et de bismuth d'erbium,
   o un mélange de pérovskite de lanthane et de zircone cubique;
   o une chromite,
   o un titanate de lanthane,
   o un titanate de [strontium dopé au niobium],
   o un titanate de [strontium dopé à l'yttrium],
   o un chromo - manganite de [lanthane dopé au strontium],
   o une zircone (ZrO₂) monoclinique,
   o une zircone (ZrO₂) partiellement stabilisée,
   o une zircone (ZrO₂) cubique,
   o de l'oxyde de cérium (CeO₂),
   o de l'oxyde de cérium (CeO₂) dopé à l'oxyde de samarium (Sm₂O₃) et/ou, à l'oxyde de gadolinium (Gd₂O₃),
   o un cermet comportant de l'oxyde de cérium (CeO₂),
   o un cermet comportant de la chromite de [lanthane dopé au strontium],
   o un cermet comportant de la zircone (ZrO₂) partiellement stabilisée,
   o un cermet comportant de la zircone (ZrO₂) cubique.
- De préférence, ladite matière est choisie parmi :
   o un pérovskite de manganèse,
   o un pérovskite de lanthane,
   o un mélange de pérovskite de manganèse et de pérovskite de lanthane,
   o un pérovskite de [lanthane dopé au strontium et/ou au calcium et/ou au magnésium, et/ou à l'yttrium et/ou à l'ytterbium et/ou au cérium]-manganèse,
   o un pérovskite de lanthane - manganèse codopé de formule La_{1-x-w} (Ca)_{0,2} (Ce)_{w+z} (Mn)_{1-y} (Ms2)_{y} O₃ avec Ms2 choisi parmi le nickel (Ni) et/ou le chrome (Cr) et/ou le magnésium (Mg), et 0,15 < x <0,25, x valant de préférence environ 0,2, 0,1 < w < 0,2 ; 0,03 < y < 0,2 et 0< z < 0,005,
   o un pérovskite de [lanthane dopé au strontium] -cobalt,
   o un pérovskite de [lanthane dopé au strontium et cobalt] - fer,
   o un nickelate de lanthane et/ou de praséodyme et/ou de néodyme,
   o une chromite,
   o un titanate de [lanthane dopé au strontium et/ou au manganèse et/ou au gallium],
   o un chromo - manganite de [lanthane dopé au strontium],
   o une zircone partiellement stabilisée,
   o une zircone cubique,
   o un cermet comportant de l'oxyde de cérium (CeO₂),
   o un cermet ruthénium - chromite de [lanthane dopé au strontium],
   o un cermet comportant de la zircone (ZrO₂) partiellement stabilisée,
   o un cermet comportant de la zircone (ZrO₂) cubique.
- De préférence encore, ladite matière est choisie parmi :
   o un pérovskite de [lanthane dopé au strontium et/ou au calcium]-manganèse, de préférence de formule (La₍₁₋ₓ)Mₓ)_{(1-y)}MnO_{3-δ} avec M choisi dans le groupe composé du strontium, du calcium et de leurs mélanges, (0<x et/ou x<0,5) et (-0,1≤y et/ou y≤0,24) et δ permettant d'assurer l'électroneutralité, M étant de préférence le strontium,
   o une chromite de lanthane (LaCrO₃),
   o une zircone partiellement stabilisée à l'oxyde d'yttrium (Y₂O₃) et/ou à l'oxyde de scandium (Sc₂O₃) et/ou à l'oxyde de cérium (CeO₂),
   o une zircone cubique,
   o un cermet comportant de l'oxyde de cérium (CeO₂) dopé à l'oxyde de samarium, (Sm₂O₃) et/ou à l'oxyde de gadolinium (Gd₂O₃),
   o un cermet comportant de la zircone (ZrO₂) partiellement stabilisée à l'oxyde d'yttrium (Y₂O₃),
   o un cermet comportant de la zircone cubique stabilisée à l'oxyde d'yttrium (Y₂O₃).
- De préférence encore, ladite matière est choisie parmi :
   o un pérovskite de [lanthane dopé au strontium]-manganèse,
   o une chromite de lanthane dopé au strontium,
   o une zircone partiellement stabilisée à l'oxyde d'yttrium,
   o une zircone cubique stabilisée à l'oxyde d'yttrium (Y₂O₃) et/ou à l'oxyde de scandium (Sc₂O₃) et/ou à l'oxyde de cérium (CeO₂),
   o un cermet [nickel ou cobalt ou cuivre ou ruthénium ou iridium]-oxyde de cérium (CeO₂) dopé à l'oxyde de samarium (Sm₂O₃) et/ou à l'oxyde de gadolinium (Gd₂O₃),
   o un cermet [nickel ou cobalt ou cuivre ou ruthénium] - zircone partiellement stabilisée à l'oxyde d'yttrium, de préférence un cermet nickel - zircone partiellement stabilisée à l'oxyde d'yttrium,
   o un cermet [nickel ou cobalt ou cuivre ou ruthénium] - zircone cubique stabilisée à l'oxyde d'yttrium.
- De préférence encore, ladite matière est choisie parmi :
   o un pérovskite de [lanthane dopé au strontium]-manganèse de formule (La₍₁₋ₓ)Srₓ)_{(1-y)}MnO_{3-δ} avec (0,15<x et/ou x<0,35) et (0≤y et/ou y≤0,1) et δ permettant d'assurer l'électroneutralité,
   o une zircone partiellement stabilisée avec une teneur molaire en oxyde d'yttrium comprise entre 3 et 8%,
   o une zircone cubique stabilisée à l'oxyde d'yttrium,
   o un cermet nickel - zircone partiellement stabilisée avec une teneur molaire en oxyde d'yttrium comprise entre 3 et 8%,
   o un cermet nickel - zircone cubique stabilisée à l'oxyde d'yttrium.
- De préférence encore, ladite matière est choisie parmi :
   o un pérovskite de [lanthane dopé au strontium]-manganèse de formule (La₀,₈Sr₀.₂)_{(1-y)}MnO_{3-δ} avec (0≤y et/ou y≤0,1) et δ permettant d'assurer l'électroneutralité,
   o une zircone cubique stabilisée avec une teneur molaire en oxyde d'yttrium (Y₂O₃) comprise entre 8 et 10%,
   o un cermet nickel - zircone cubique stabilisée avec une teneur molaire en oxyde d'yttrium comprise entre 8 et 10%.
- De plus, ladite matière peut être formée par un mélange des composés cités dans les six listes ci dessus.
- De préférence enfin, ladite poudre est avantageusement constituée en un pérovskite de lanthane-manganèse, notamment pour fabriquer une cathode d'une pile SOFC. Elle peut également être constituée en un pérovskite de [lanthane dopé strontium]-manganèse de formule (La₀.₈Sr_{0.2})_{(1-y)}MnO_{3-δ} avec (0≤y et/ou y≤0,1) et δ permettant d'assurer l'électroneutralité.
- De préférence, les grains de la poudre ne comportant pas une de ces matières sont des grains indésirables, comme par exemple des particules de fer amenées par le broyage, et représentent moins de 1 % en masse des grains de la poudre.
- De préférence, les constituants des grains de la poudre différents des matières préférées citées ci-dessus sont des impuretés, généralement introduites avec les matières premières lors de la fabrication, mais sans avoir été souhaitées. Elles représentent de préférence moins de 1 % en masse de la poudre, de préférence moins de 0,7 %.
- De préférence, les grains de la poudre sont des grains « fondus », c'est-à-dire obtenus par un procédé mettant en oeuvre'une fusion de matières premières et une solidification par refroidissement. De préférence, les grains de la poudre résultent d'un broyage d'un ou plusieurs corps massifs fondus. De préférence encore, le broyeur utilisé est un broyeur à rouleaux.

L'invention concerne aussi les matières listées ci-dessus sous une forme quelconque, par exemple sous la forme d'un bloc, d'une bille ou d'une particule de poudre, dans la mesure où elles sont obtenues par un procédé de fusion. Avantageusement, un tel procédé permet une production desdites matières de manière industrielle et avec un bon rendement.

L'invention concerne également un procédé de fabrication d'une poudre selon l'invention comportant au moins les étapes suivantes :
a) synthèse d'un corps massif, de préférence par frittage, frittage sous pression (« IP »), pressage isostatique à chaud (« HIP »), SPS (« Spark Plasma Sintering » ou frittage flash), ou fusion, la fusion étant la voie de synthèse préférée entre toutes,
b) réduction éventuelle dudit corps massif en un ensemble de particules, éventuellement par concassage;
c) de préférence, sélection, par exemple par tamisage, des particules présentant une taille supérieure à la taille maximale des grains D₉₉.₅ de la poudre à fabriquer et/ou inférieure à 100 fois cette taille maximale, de préférence inférieure à 10 fois cette taille maximale, de préférence encore inférieure à 4 fois cette taille ;
d) broyage du corps massif obtenu à l'étape a) ou des particules obtenues à l'étape b) ou à l'étape c) de manière à obtenir une poudre selon l'invention, de préférence dans des conditions favorisant les contraintes de cisaillement, en particulier au moyen d'un broyeur à rouleaux.

Dans un mode de réalisation préféré, pour fabriquer une poudre selon l'invention apte à traverser un tamis de maille carrée d'ouverture 02 (l'ouverture désignant la longueur du côté de la maille), on sélectionne à l'étape c) des particules ne passant pas à travers un tamis de maille carrée d'ouverture O1 et passant à travers un tamis de maille carrée d'ouverture 03, O1 étant supérieur à 02 et 03 étant de préférence inférieur à cent fois O2, de préférence inférieur à dix fois 02, de préférence encore inférieur à 4 fois 02.

En variante, le procédé selon l'invention comporte également une ou plusieurs des étapes optionnelles e), f) et g) suivantes :
e) sélection de grains issus de l'étape d) et appartenant à des plages granulométriques déterminées en fonction de l'application visée ;
f) déferrage afin d'éliminer les éventuelles particules magnétiques introduites lors du broyage réalisé à l'étape d) ;
g) vérification de la qualité de la poudre, de préférence par échantillonnage.

A l'étape a), le corps massique peut être au moins millimétrique, c'est-à-dire tel que toutes les dimensions dépassent au moins 1 mm. En variante, et en particulier pour fabriquer des poudres passant à travers un tamis de maille carrée de 53 µm, on utilise de préférence des corps présentant au moins une dimension inférieure à 1 mm, de préférence des billes de plus grand diamètre inférieur à 500 µm, voire inférieur à 100 µm et, de préférence, ne passant pas à travers un tamis de maille carrée d'ouverture de 53 µm. L'utilisation de telles billes s'est avérée particulièrement performante.

L'invention concerne également une poudre fabriquée suivant un procédé de fabrication selon l'invention.

L'invention concerne aussi un mélange d'une première poudre selon l'invention en un premier matériau et d'une deuxième poudre en un deuxième matériau différent dudit premier matériau. De préférence la teneur en poudre selon l'invention est supérieure ou égale à 30%, ou supérieure ou égale à 50%, ou supérieure ou égale à 60%, en poids du mélange. La poudre selon l'invention peut notamment être une poudre de zircone, par exemple sélectionnée entre des tamis d'ouverture comprise entre 20 µm et 53 µm. La deuxième poudre peut en particulier être une poudre d'oxyde de nickel, NiO. Les particules de la deuxième poudre sont de préférence sensiblement sphériques et la taille médiane de cette deuxième poudre est de préférence inférieure à 10 µm, de préférence d'environ 1 µm.

Le mélange peut être constitué desdites première et deuxième poudres.

L'invention concerne en particulier un mélange de 60% d'une poudre de zircone selon l'invention, et de 40% de poudre de NiO. Un tel mélange permet de fabriquer des pièces poreuses-présentant une bonne résistance mécanique.

Lorsqu'une poudre selon l'invention est telle que plus de 40 % en nombre de ses grains présentent un facteur de forme R supérieur à 1,5, des grains sensiblement sphériques, c'est-à-dire présentant un facteur de forme médian compris entre 1 et 1,3, peuvent être ajoutés, pourvu que la poudre obtenue reste conforme à l'invention. Avantageusement, la résistance mécanique peut ainsi être améliorée, la porosité totale restant acceptable pour fabriquer une électrode d'une pile de type SOFC.

L'invention concerne ainsi également un procédé de fabrication d'une poudre, ce procédé comportant une opération de mélange d'une première poudre selon l'invention dont plus 40 % en nombre des grains présentent un facteur de forme (R) supérieur à 1,5 avec une deuxième poudre des grains présentant un facteur de forme médian (R*) compris entre 1 et 1,3, la quantité de ladite deuxième poudre étant déterminée de manière que la poudre fabriquée soit conforme à l'invention.

De préférence, la quantité de ladite deuxième poudre représente entre 0 et 40% de la masse de la poudre fabriquée.

De préférence encore, au moins une desdites première et deuxième poudres, de préférence les deux, présente(nt) une formule chimique du type (La₍₁₋ₓ₎M_{x(1-y)}MnO_{3-δ} avec M choisi dans le groupe composé du strontium, du calcium et de leurs mélanges, (0<x et/ou x<0,5) et (-0,1≤y et/ou y≤0,24) et δ permettant d'assurer l'électroneutralité.

De manière générale, les deux dites première et deuxième poudres peuvent présenter la même composition.

Dans un mode de réalisation particulier, la deuxième poudre présente une répartition granulométrique cumulée conforme à celle d'une poudre selon l'invention.

L'invention concerne aussi l'utilisation d'une poudre selon l'invention, ou d'une poudre fabriquée ou susceptible d'être fabriquée suivant un procédé selon l'invention, dans la fabrication de matériaux poreux, en particulier sous la forme de couches poreuses, notamment sous la forme de couches d'épaisseur inférieure à 2 mm, à 1 mm ou à 500 µm, voire d'épaisseur encore inférieure, lesdits matériaux poreux pouvant présenter une porosité totale supérieure à 20%, de préférence à 25 %, voire supérieure à 30 % ou 40 %, et atteignant même 50 %. La porosité ouverte peut être comprise entre 25 et 50 %, de préférence entre 30 et 45 %, de préférence entre 30 et 40 %. Ces matériaux poreux peuvent présenter une résistance mécanique en flexion biaxiale (Biaxial flexure strength) supérieure à 20 mPa, voire supérieure à 24 MPa mesurée selon la norme ASTM C1499-05, notamment pour des matériaux de pérovskite de [lanthane dopé au strontium] - manganèse. Une poudre selon l'invention peut ainsi être notamment utilisée pour la fabrication de piles à combustible à oxyde solide (SOFC), en particulier pour la fabrication de cathodes pour ces piles.

L'invention concerne ainsi aussi l'utilisation d'une poudre selon l'invention, ou d'une poudre fabriquée ou susceptible d'être fabriquée suivant un procédé selon l'invention, dans la fabrication d'électrodes pour piles à combustible à oxyde solide (SOFC).

L'invention concerne également un produit façonné obtenu à partir d'une poudre selon l'invention, en particulier une pièce crue et un produit fritté obtenu par frittage de ladite pièce crue. Avantageusement, ce produit fritté peut présenter une porosité totale après frittage supérieure à 20%, de préférence comprise entre 25% et 50% en volume, de préférence entre 30 % et 45 %, de préférence toujours entre 30 % et 40 % en volume. Le produit fritté peut notamment se présenter sous la forme d'une couche d'une épaisseur comprise entre 1 et 2 mm, voire d'épaisseur inférieure à 500 µm.

En particulier, la présente invention se rapporte à une électrode, c'est-à-dire une cathode ou une anode, fabriquée à partir d'une poudre selon l'invention. La quantité de grains allongés de pérovskite de lanthane-manganèse est alors déterminée pour générer une porosité totale dans la cathode d'au moins 20% du volume total de ladite cathode.

L'invention concerne également un élément, appelé « cellule élémentaire », d'une pile à combustible à oxyde solide comportant une cathode destinée à être en contact avec une source gazeuse d'oxygène ou contenant de l'oxygène, une anode destinée à être en contact avec un combustible gazeux, et un électrolyte disposé entre l'anode et la cathode. Selon l'invention, cette cathode et/ou cette anode sont fabriquées à partir d'une poudre selon l'invention ou d'une pièce crue selon l'invention. La poudre utilisée peut être en particulier une poudre de pérovskite de lanthane-manganèse pour la cathode.

L'invention concerne aussi une pile à combustible à oxyde solide (SOFC) comportant généralement un empilement de cellules élémentaires, au moins une cellule, de préférence toutes les cellules, étant conforme(s) à l'invention.

De préférence, la pile comporte au moins deux cellules élémentaires et un interconnecteur électrique, de préférence plan et, de préférence encore présentant une épaisseur comprise entre 10 et 1000 µm, voire inférieure à 200 µm, est disposé entre lesdites cellules élémentaires.

De préférence, la pile comporte une pluralité de cellules élémentaires connectées électriquement en série.

L'invention concerne également un procédé de fabrication d'un produit fritté poreux et un procédé de fabrication d'une électrode, en particulier d'une cathode d'une cellule élémentaire selon l'invention, ces procédés comportant les étapes successives suivantes :
A) Préparation d'une poudre selon l'invention ;
B) Mise en forme de ladite poudre ;
C) Frittage de ladite poudre ainsi mise en forme.

La poudre utilisée à l'étape A) peut notamment être fabriquée suivant un procédé selon l'invention, comme décrit ci-dessus.

La poudre utilisée à l'étape A) peut en particulier être une poudre de pérovskite de lanthane-manganèse, dopé, notamment au strontium, ou non.

L'invention concerne aussi un procédé de fabrication d'une cellule élémentaire d'une pile à combustible comprenant les étapes suivantes :
1) fabrication, suivant un procédé comportant les étapes A) à C) ci-dessus, d'une cathode destinée à être en contact avec une source d'oxygène gazeux et d'une anode destinée à être en contact avec un combustible gazeux; et
2) fabrication et mise en place d'un électrolyte entre la cathode et l'anode.

L'invention concerne enfin un procédé de fabrication d'un empilement de cellules élémentaires d'une pile à combustible à oxyde solide (SOFC), une pile à combustible à oxyde solide comportant classiquement une ou plusieurs cellule(s) élémentaire(s), généralement constituée(s) d'une anode, sous la forme du couche, d'une cathode, sous la forme d'une couche, et d'une couche d'électrolyte disposée en contact entre les couches d'anode et de cathode. Selon l'invention, la couche de cathode et/ou la couche d'anode sont obtenues par frittage d'une poudre selon l'invention.

### Définitions

On appelle « facteur de forme » R le rapport entre la plus grande dimension apparente, ou « longueur » *L,* et la plus petite dimension apparente, ou « largeur » *W,* d'un grain. La longueur et la largeur d'un grain sont classiquement mesurées par la méthode suivante. Après avoir prélevé un échantillon représentatif des grains de la poudre, ces grains sont partiellement noyés dans de la résine et subissent un polissage apte à rendre possible une observation en surface polie. Les mesures du facteur de forme sont réalisées à partir d'images de ces surfaces polies, ces images étant acquises avec un Microscope Electronique à Balayage (MEB), en électrons secondaires, avec une tension d'accélération de 10 kV et un grandissement de x100 (ce qui représente 1 µm par pixel sur le MEB utilisé). Ces images sont de préférences acquises dans des zones où les grains sont les mieux séparés, afin de faciliter par la suite la détermination du facteur de forme. Sur chaque grain de chaque image sont mesurées la plus grande dimension apparente, appelée longueur *L*, et la plus petite dimension apparente, appelée *W.* De préférence, ces dimensions sont mesurées à l'aide d'un logiciel de traitement d'images, comme par exemple VISILOG commercialisé par la société NOESIS. Pour chaque grain, le facteur de forme R = *L*/*W* est calculé. La distribution du facteur de forme de la poudre peut ensuite être déterminée à partir de l'ensemble des mesures de facteur de forme R réalisées.

On appelle « facteur de forme médian » R* d'un ensemble de grains, la valeur du facteur de forme telle que 50% en nombre des grains présentent un facteur de forme inférieur à cette valeur et telle que 50% en nombre des grains présentent un facteur de forme supérieur à cette valeur.

La « densité apparente exprimée en fonction de la densité théorique » et la « porosité totale en volume » sont mesurées sur les différentes couches d'un empilement de cellules élémentaires par la méthode suivante : L'empilement comprenant au moins une cellule élémentaire est coupé selon l'épaisseur, ce qui permet de mettre en évidence les différentes couches composant cet empilement. Le plan de coupe, exposant toutes les couches, est observé à l'aide d'un microscope électronique à balayage (MEB). Des régions sont sélectionnées de façon aléatoire dans les différentes couches. Typiquement, 6 régions de même surface sont sélectionnées de manière aléatoire sur chaque couche observée. Typiquement, les dimensions de ces régions sont de 550 microns x 550 microns pour une couche de cathode et de 20 microns x 20 microns pour une couche de cathode fonctionnelle. A partir de l'observation de chaque région, il est possible de déterminer la surface couverte par la matière (généralement de couleur blanche) et la surface couverte par les pores (généralement de couleur sombre). Pour chaque région, il est ainsi possible de déterminer les grandeurs suivantes :
- La densité « locale », en pourcentage de la densité théorique, qui est égale à la surface couverte par la matière divisée par la surface totale de la région considérée ;
- La porosité totale « locale », égale à la surface couverte par les pores divisée par la surface totale de la région considérée.

La densité de la couche considérée, exprimée en pourcentage de la densité théorique, est égale à la moyenne des densités locales. La porosité totale en volume de la couche considérée est égale à la moyenne des porosités totales locales.

Par « taille d'un grain », on entend la taille d'un grain donnée classiquement par une caractérisation de distribution granulométrique réalisée avec un granulomètre laser. Le granulomètre laser utilisé ici est un Partica LA-950 de la société HORIBA.

Les percentiles ou « centiles » 10 (D₁₀), 50 (D₅₀), 90 (D₉₀) et 99,5 (D₉₉.₅) sont les tailles de grains correspondant aux pourcentages, en volume, de 10 %, 50 %, 90 % et 99,5 % respectivement, sur la courbe de distribution granulométrique cumulée des tailles de grains de la poudre, les tailles de grains étant classées par ordre croissant. Par exemple, 10 %, en volume, des grains de la poudre ont une taille inférieure à D₁₀ et 90 % des grains en volume ont une taille supérieure à D₁₀. Les percentiles peuvent être déterminés à l'aide d'une distribution granulométrique réalisée à l'aide d'un granulomètre laser.

On appelle « taille maximale des grains d'une poudre », le percentile 99,5 (D_{99.5}) de ladite poudre.

On appelle « taille médiane des grains d'une poudre », le percentile 50 (D₅₀) de ladite poudre.

On appelle « zircone partiellement stabilisée » une zircone qui n'est ni totalement monoclinique, ni totalement cubique (c'est-à-dire totalement stabilisée). Une « zircone partiellement stabilisée », doit ainsi présenter au moins deux des formes cristallographiques monoclinique, quadratique et cubique ou être totalement sous la forme quadratique.

On appelle « pérovskite de lanthane-manganèse » un pérovskite de lanthane-manganèse dopé ou non.

On appelle classiquement « cermet » un matériau composite contenant à la fois une phase céramique et une phase métallique.

Les « conducteurs électriques » comprennent les conducteurs électroniques, les conducteurs ioniques et les conducteurs mixtes (ionique et électronique).

Dans les différentes formules, δ peut être compris entre -0,2 et 0,2, et en particulier peut être nul.

Par « bille », on entend une particule présentant une sphéricité, c'est-à-dire un rapport entre son plus petit diamètre et son plus grand diamètre, supérieure à 0,7, quelle que soit la façon par laquelle cette sphéricité a été obtenue. Les plus grand et plus petit diamètres sont les plus grande et plus petite dimensions de la bille.

A la connaissance des inventeurs, les poudres de l'art antérieur ne présentent pas au moins 40% en nombre de billes présentant une sphéricité inférieure à 0,7.

### Brève description des figures

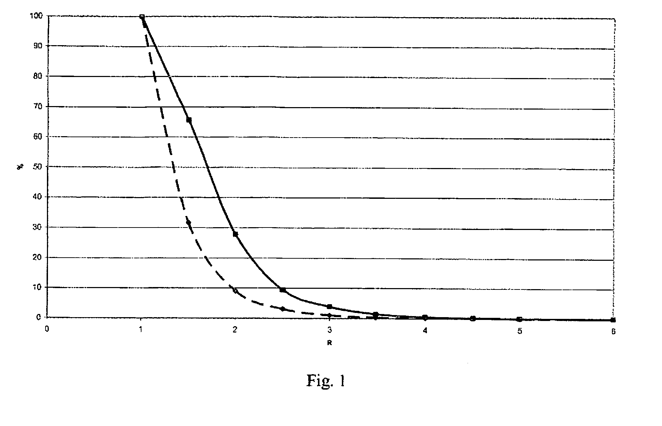

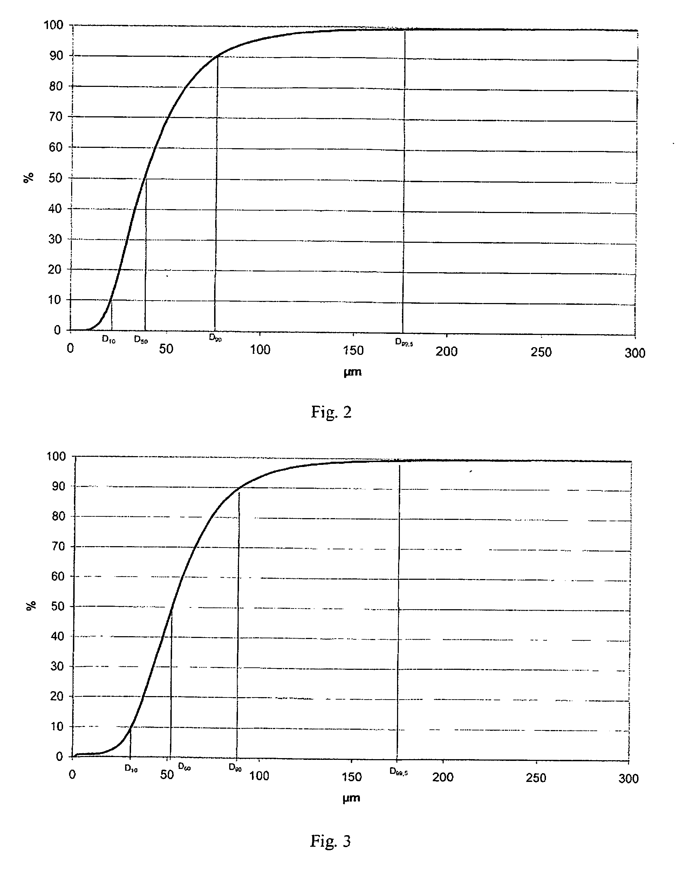

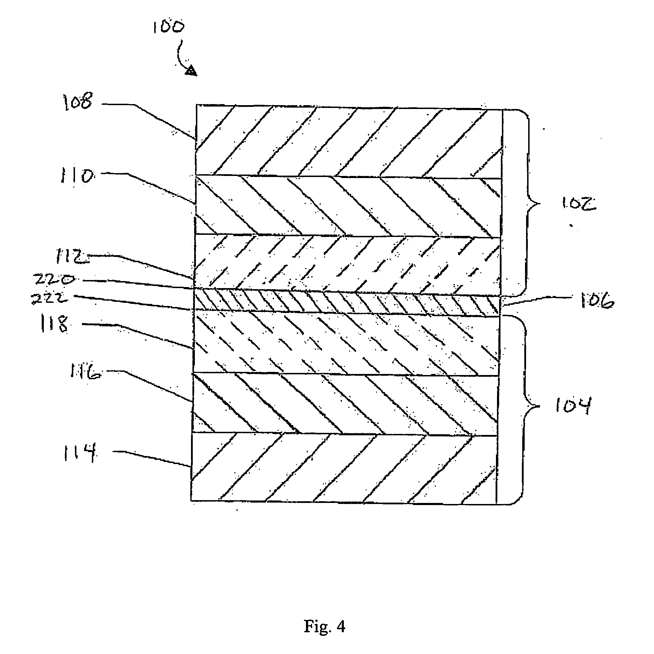

D'autres caractéristiques et avantages de l'invention apparaîtront encore à la lecture de la description qui va suivre et à l'examen du dessin annexé dans lequel
o la figure 1 représente les courbes de répartition du facteur de forme R de la poudre de l'exemple 1 (en trait continu) et de la poudre de l'exemple comparatif (en trait interrompu), en pourcentages en nombre (le pourcentage en nombre de grains donné en ordonnée représente ainsi la quantité de grains présentant un facteur de forme R supérieur à la valeur correspondante donnée en abscisse),
o la figure 2 représente la courbe de distribution granulométrique des tailles de grains de la poudre de l'exemple 1 selon l'invention, les grains étant classés par taille croissante,
o la figure 3 représente la courbe de distribution granulométrique des tailles de grains de la poudre de l'exemple comparatif, les grains étant classés par taille croissante, et
o la figure 4 représente une pile à combustible à oxyde solide (SOFC) selon l'invention.

### Description détaillée d'un mode de réalisation de l'invention

Comme expliqué précédemment, une poudre selon l'invention peut être fabriquée suivant les étapes a) à g) décrites précédemment.

A l'étape a), l'objectif est de fabriquer des corps massifs présentant une résistance suffisante pour « éclater » lors du broyage. Autrement dit, il ne faut pas que les corps massifs préparés soient de simples agglomérations de grains susceptibles de s'effriter lors du broyage, un tel effritement ne permettant pas d'obtenir suffisamment de grains allongés pour une exploitation industrielle. Tous les procédés de synthèse sont envisageables, de simples essais permettant de rechercher les conditions les plus favorables. Un soufflage d'une composition fondue est bien adapté.

A l'étape b), optionnelle, les corps massifs sont réduits, par exemple concassés de façon à augmenter la quantité de particules susceptibles d'être sélectionnées lors de l'étape optionnelle c).

L'étape c), optionnelle, a pour objectif de garantir qu'après éclatement des particules introduites dans le broyeur, les grains obtenus en sortie du broyeur présenteront des tailles suffisantes pour que la poudre reste relativement grossière et puisse respecter le critère relatif au percentile 10 (D₁₀ ≥4 µm).

A cet effet, il est possible que la taille minimale des corps massifs ou des particules entrant dans le broyeur soit au moins supérieure, et, de préférence moins de cent fois supérieure à la taille maximale des grains de la poudre à fabriquer, de préférence moins de dix fois supérieure à la taille maximale des grains de la poudre à fabriquer, de préférence encore moins de quatre fois supérieure à la taille maximale des grains de la poudre à fabriquer.

Dans un mode de réalisation préféré, pour fabriquer une poudre selon l'invention apte à traverser un tamis de maille carrée d'ouverture 02 (l'ouverture désignant la longueur du côté de la maille), on sélectionne à l'étape c) des particules ne passant pas à travers un tamis de maille carrée d'ouverture O1 et passant à travers un tamis de maille carrée d'ouverture 03, O1 étant supérieur à 02 et 03 étant de préférence inférieur à cent fois 02, de préférence inférieur à dix fois O2, dé préférence encore inférieur à 4 fois 02.

A l'étape d), on utilise un broyeur favorisant les contraintes de cisaillement, de préférence un broyeur à rouleaux.

Dans le cas d'un broyeur à rouleaux, l'écartement des rouleaux peut être réglé de manière que la poudre broyée présente un percentile 10, D₁₀ supérieur ou égal à quatre microns et, de préférence, une ou plusieurs des caractéristiques préférées mentionnées précédemment.

Un broyeur à rouleaux est préféré en particulier si les particules introduites dans le broyeur sont issues du concassage d'un bloc.

D'autres types de broyeurs, en particulier les broyeurs à jets d'air comme ceux du type « jet milling», sont envisageables. Si un broyeur n'est pas un broyeur à rouleaux, il devra cependant faire l'objet d'essais afin de vérifier qu'il convient au matériau broyé.

Avec les procédés actuels, les broyeurs à boulets ou à billes ne sont pas non plus des broyeurs permettant d'obtenir une quantité élevée de grains allongés. En effet, ces types de broyeurs vont avoir pour effet de réduire la dimension des grains introduits généralement en diminuant également leur facteur de forme.

De manière surprenante, les inventeurs ont cependant découvert qu'il est possible d'obtenir efficacement une poudre selon l'invention en utilisant un broyeur à boulets ou à billes, à condition de broyer, à l'étape d), des billes, de préférence creuses. Le procédé ne comporte alors pas d'étape b).

Le cas échéant, à l'étape d), le temps de broyage, le volume de matière et d'agent broyant dans le broyeur, et la vitesse de rotation sont ajustés pour optimiser le rendement. De préférence, le broyage est intense mais le temps de broyage est limité de façon à faire éclater les billes et à créer des grains de forme allongée, sans réduire le facteur de forme ainsi obtenu.

Les poudres selon l'invention des exemples 2 et 3 sont obtenues à partir de billes creuses broyées dans un broyeur à boulets.

De préférence, pour fabriquer une poudre selon l'invention traversant un tamis de maille carrée d'ouverture 02, on utilise à l'étape d) des billes ne passant pas à travers un tamis de maille carrée d'ouverture O1 et passant à travers un tamis de maille carrée d'ouverture 03, O1 étant supérieur à 02 et 03 étant de préférence inférieur à cent fois 02, de préférence inférieur à dix fois O2, de préférence encore inférieur à 4 fois O2.

L'utilisation de billes creuses permet avantageusement d'obtenir des particules selon l'invention avec un broyeur à rouleaux ou un broyeur à boulets ou à billes, voire un broyeur à jet d'air.

Une étape supplémentaire optionnelle e) peut également être mise en oeuvre afin de sélectionner les plages granulométriques préférées, en fonction de l'application visée. Le cas échéant, des poudres présentant des répartitions granulométriques et/ou des pourcentages de grains allongés différents peuvent être mélangées pour obtenir une poudre selon l'invention.

Une étape optionnelle f) peut également être mise en oeuvre afin d'éliminer par déferrage les particules magnétiques notamment introduites lors de l'étape d). De préférence, cette étape est réalisée à l'aide d'un déferreur à haute intensité. Cette étape optionnelle ne sera pas réalisée dans les cas où la poudre recherchée est magnétique.

Le cas échéant, dans une étape ultérieure optionnelle g), la qualité de la poudre obtenue suite au broyage est vérifiée, de préférence par échantillonnage, par exemple au microscope, au microscope électronique à balayage ou par tout moyen connu permettant de contrôler la forme des grains.

A l'issue de ce procédé, on obtient une poudre selon l'invention dont la distribution cumulée, en fonction du facteur de forme R, présente un profil similaire à celui représenté en trait continu sur la figure 1.

Avantageusement, la poudre selon l'invention permet de fabriquer un matériau présentant une porosité totale élevée, typiquement comprise entre 25 et 50 % pour des poudres de pérovskite de [lanthane dopé au strontium]-manganèse, sans ajout d'agent porogène. De manière surprenante, comme le montrent les essais ci-dessous, la poudre selon l'invention permet de fabriquer des produits qui présentent une résistance en flexion biaxiale (biaxial flexure strength) environ deux fois plus élevée (d'environ 25 MPa) que les produits fabriqués au moyen de poudres ne présentant pas les caractéristiques de l'invention (qui, à porosité totale identique, présentent une résistance en flexion biaxiale de l'ordre de 13 MPa).

A cet effet, la poudre selon l'invention peut être frittée, suivant des techniques de frittage classiques, de préférence par pressage à chaud.

La poudre selon l'invention peut en particulier être utilisée dans le cadre de la fabrication d'une pile à combustible à oxyde solide (SOFC).

Selon un mode de réalisation, l'invention concerne un procédé de fabrication d'un empilement de cellules élémentaires d'une pile à combustible à oxyde solide (SOFC). Typiquement, une pile à combustible à oxyde solide (SOFC) contient une ou plusieurs cellules élémentaires, généralement constituées d'une anode, sous la forme d'une couche d'anode, d'une cathode, sous la forme d'une couche de cathode, et d'une couche d'électrolyte, disposée en contact entre les couches de cathode et d'anode.

La figure 4 décrit un exemple de pile à combustible à oxyde solide (SOFC) 100, fabriquée par un procédé de pressage à chaud. La pile à combustible à oxyde solide (SOFC) 100 est constituée d'une première cellule élémentaire 102, d'une seconde cellule élémentaire 104, et d'une couche d'interconnecteur 106 séparant lesdites deux cellules élémentaires. La première cellule élémentaire 102 est composée d'une première couche d'électrode 108, d'une couche d'électrolyte 110 et d'une seconde couche d'électrode 112. La seconde cellule élémentaire 104 est composée d'une première couche d'électrode 114, d'une couche d'électrolyte 116 et d'une seconde couche d'électrode 118. La figure 4 illustre en particulier la liaison 220 entre la couche d'interconnecteur 106 et la seconde couche d'électrode 112 de la première cellule élémentaire 102. La seconde liaison 222 entre la couche d'interconnecteur 106 et la seconde couche d'électrode 118 de la deuxième cellule élémentaire est également représentée. Selon l'invention, la couche de cathode et/ou la couche d'anode sont fabriquées par frittage d'une poudre selon l'invention.

Selon un mode de réalisation, la couche de cathode est formée à partir d'un oxyde céramique ou d'un précurseur de cet oxyde. En particulier, comme dans les exemples, la couche de cathode peut contenir du lanthane et du manganèse. Elle peut également contenir du strontium, cette dernière formulation étant communément appelée LSM (manganite de lanthane dopé au strontium, ou « Lanthanum Strontium Manganate » en anglais). Par exemple, une cathode peut être réalisée en un produit de pérovskite de lanthane-manganèse de formule (La₍₁₋ₓ₎Mₓ)_{(1-y)}MnO_{3-δ}. M étant sélectionné dans le groupe composé du strontium, du calcium et de leurs mélanges, (0<x et/ou x<0,5) et (-0,1≤y et/ou y<0,24) et δ permettant d'assurer l'électroneutralité. De préférence 0≤y et/ou y≤0,24. De préférence M est le strontium.

La couche d'anode peut être un cermet, c'est-à-dire un matériau composé d'une phase céramique et d'une phase métallique, obtenu à partir d'une poudre contenant ledit cermet ou un précurseur de ce cermet. La phase céramique du cermet de la couche d'anode peut contenir de la zircone et la phase métallique peut contenir du nickel. En particulier, la phase céramique peut être de la zircone stabilisée, comme de la zircone stabilisée à l'oxyde d'yttrium (YSZ). Le nickel peut en particulier être obtenu par réduction d'oxyde de nickel contenu dans un précurseur du produit constituant la couche d'anode, réduction résultant généralement d'un traitement thermique.

De plus, les électrodes finies des cellules élémentaires, anode comme cathode, présentent généralement une porosité importante afin d'assurer le transport des espèces gazeuses participant aux réactions d'oxydation / réduction se déroulant au sein des cellules élémentaires. Selon un mode de réalisation, les électrodes finies des cellules élémentaires présentent une porosité supérieure à 20% en volume, ou supérieure à 30% en volume, ou supérieure à 50% en volume, ou encore supérieure à 70% en volume. De préférence, la porosité des électrodes des cellules élémentaires est comprise entre 15% et 70% en volume, de préférence comprise entre 25% et 50% en volume, de préférence comprise entre 30% et 45% en volume, de préférence encore comprise entre 30% et 40% en volume.

Dans un autre mode de réalisation, les électrodes peuvent comporter des canaux permettant un meilleur approvisionnement en gaz de celles-ci, ainsi qu'une meilleure évacuation des gaz. Il existe une grande variété de produits susceptibles de créer ces canaux à l'intérieur des couches d'anode ou de cathode. En général, ces produits sont choisis de façon à brûler ou à être éliminés lors du traitement thermique et ne doivent pas réagir avec les particules céramiques. Ces deux conditions sont remplies par des matériaux à base de produits organiques, comme par exemple des fibres organiques. Celles-ci peuvent être naturelles comme le coton, animales comme la laine, ou manufacturées comme des fibres en cellulose régénérée, diacétate de cellulose, triacétate de cellulose, polyamide, polyester, polyacrylique, polyvinylique, résine de polyoléfine, carbone ou graphite.

En alternative, les canaux peuvent être formés dans les électrodes sans employer de fibres ou de produits éliminés lors du frittage. Ces canaux peuvent être formés par pressage, moulage ou toute autre technique connue de l'art.

La fabrication de la couche d'électrolyte peut être effectuée à partir d'oxydes ou de précurseurs de ces oxydes. Des matériaux adaptés à cette application sont les oxydes céramiques et/ou des précurseurs de ces oxydes, comme par exemple la zircone (ZrO₂), la cérine (CeO₂), l'oxyde de gallium (Ga₂O₃), et d'autres conducteurs ioniques connus. La conduction des ions oxygène peut être améliorée par l'utilisation d'oxydes stabilisants comme par exemple les oxydes d'yttrium, de scandium, d'ytterbium, de samarium, de gadolinium, de titane, de cérium, de calcium, de magnésium, d'indium, d'étain. De préférence, les oxydes stabilisants sont choisis parmi les oxydes d'yttrium, de samarium, de scandium, d'indium, de gadolinium et de leurs mélanges. Parmi les différents matériaux possibles, la couche d'électrolyte peut ainsi être composée par exemple de zircone stabilisée à l'oxyde d'yttrium, ou de cérine dopée à l'oxyde de samarium, ou de cérine dopée à l'oxyde de gadolinium, ou de cérine dopée à l'oxyde de calcium.

La fabrication d'un empilement de cellules élémentaires comprend également la fabrication d'interconnecteurs céramiques en couche et/ou de précurseurs de ces interconnecteurs céramiques. Une couche d'interconnecteur céramique est destinée à connecter électriquement deux cellules élémentaires adjacentes. Contrairement aux empilements dans lesquels les cellules élémentaires sont connectées en parallèle, la couche d'interconnecteur céramique facilite la connexion en série des cellules élémentaires. Les matériaux à base de chrome sont particulièrement adaptés à la fabrication de couche d'interconnecteur céramique. Les matériaux céramiques à base de chrome peuvent également comporter des éléments de terres rares, comme des chromites dopées aux terres rares. Selon l'un des modes de réalisation, la couche d'interconnecteur céramique peut contenir du lanthane, du strontium, du cobalt, du gallium, de l'yttrium et/ou le magnésium.

Plusieurs cellules élémentaires peuvent être fabriquées comme décrit ci-dessus.

La structure et la composition des cellules élémentaires sont de préférence sensiblement similaires, voire identiques pour toutes les cellules, en particulier en ce qui concerne les matériaux de cathode, d'anode et d'électrolyte. Des interconnecteurs relient entre elles les différentes cellules élémentaires de façon à former un empilement composé de trois, quatre, cinq, six, voire plus de 6 cellules élémentaires.

Après la fabrication d'une première cellule élémentaire, d'une seconde cellule élémentaire, et mise en place d'une couche d'interconnecteur entre les deux cellules élémentaires et assurant la connexion électrique entre ces deux cellules élémentaires, les différentes couches formant ces cellules élémentaires et l'interconnecteur subissent un pressage à chaud afin de les solidariser intégralement. Le pressage à chaud peut également s'effectuer sur un empilement composés de trois, quatre, cinq, six, voire plus de 6 cellules élémentaires, voire sur l'ensemble des cellules élémentaires nécessaires à la fabrication de la pile à combustible, une couche d'interconnecteur séparant chaque cellule élémentaire et assurant la connexion électrique.

Classiquement, la technique de pressage à chaud consiste à appliquer une pression uniaxiale grâce à un piston afin de favoriser la densification des différentes couches de matériaux. Dans un mode de réalisation, la pression maximale appliquée pendant le pressage de l'empilement des cellules élémentaires est supérieure à 0,5 MPa. Par exemple cette pression peut être supérieure à 3 MPa, par exemple supérieure à 5 MPa, par exemple encore supérieure à 8 MPa. La pression maximale appliquée pendant le pressage à chaud peut être notamment comprise entre 0,5 et 10 MPa, par exemple entre 1 et 5 MPa. La pression maximale peut être appliquée pendant un temps variant de 1 minute à 45 minutes.

De plus, le fait que cette pression soit appliquée à une température déterminée favorise la densification des différentes couches. La température utilisée pour le pressage à chaud est de préférence supérieure à 1000 °C, par exemple supérieure à 1050 °C, par exemple supérieure à 1100 °C ou 1200°C. De plus, cette température devrait de préférence être inférieure à 1800 °C, par exemple inférieure à 1700 °C ou à 1600 °C. Ainsi, la température maximale appliquée pendant le pressage à chaud peut notamment être comprise entre 1100 °C et 1700 °C. Dans un mode de réalisation, les cellules élémentaires et les empilements de cellules élémentaires peuvent être pressés à chaud avec des vitesses de montée en température comprises entre 1 °C/min et 100 °C/min.

Le cycle de pressage complet peut durer entre 1 minute et 2 heures, par exemple entre 15 minutes et 1 heure. Dans les exemples, une pression à chaud a été appliquée, le cycle de pressage durant 50 minutes, la pression maximale étant appliquée pendant 2 minutes.

L'étape de pressage à chaud peut être réalisée sous atmosphère réductrice ou, de préférence sous une atmosphère non réductrice, comme une atmosphère oxydante. Si le pressage à chaud est réalisé sous atmosphère réductrice, une étape supplémentaire d'oxydation pourra avoir lieu. Cette étape d'oxydation permet d'éliminer les éventuels matériaux ayant servi à créer les canaux permettant d'améliorer l'alimentation en gaz des électrodes, ainsi que les éventuels agents porogènes.

Un avantage lié à l'utilisation d'une poudre selon l'invention, et en particulier d'une poudre de pérovskite de lanthane-manganèse, réside dans le fait qu'il n'est pas nécessaire d'utiliser d'agents porogènes pour créer une porosité totale dans l'électrode d'au moins 20% du volume total de l'électrode.

L'utilisation d'une atmosphère oxydante peut avoir pour effet d'oxyder le nickel métallique contenu dans l'anode ou le nickel contenu dans les grillages pouvant être présents dans les différentes électrodes. Une étape de réduction supplémentaire peut cependant-être réalisée afin d'annuler les effets de cette oxydation. Un pressage à chaud en atmosphère oxydante peut avantageusement réduire le nombre d'étapes supplémentaires de réduction et d'oxydation.

Enfin, le pressage à chaud peut être avantageusement effectué sans l'aide d'un anneau, matrice ou moule permettant d'assurer une rétention de la poudre (appelé « restraining die » en anglais).

Avant la mise en forme, les poudres destinées à la fabrication des matériaux de l'électrolyte et de l'interconnecteur peuvent être tamisées de façon à sélectionner la fraction de poudre comprise entre 0,5 et 3 microns.

Typiquement, à la fin du cycle complet de fabrication, les électrodes et l'interconnecteur présentent une densité apparente supérieure ou égale à 95% de la densité théorique. L'anode et la cathode peuvent présenter une densité apparente inférieure ou égale à 80% de la densité théorique. En fonction du matériau, la granulométrie peut nécessiter un ajustement adéquat de façon à atteindre la densité appropriée. Généralement, les électrodes d'un empilement de cellules élémentaires sont composées de particules plus grosses (agglomérées ou non) que celles des produits d'électrolyte ou d'interconnecteur.

De préférence, un empilement de cellules élémentaires est réalisé par pressage à chaud en un seul cycle thermique. Dans la suite de cette description, on appelle « cycle thermique » un cycle de traitement thermique dans une chambre débutant à une température initiale et se terminant quand la température à l'intérieur de la chambre est revenue à la température initiale. Typiquement, la température initiale est une température faible, généralement inférieure à 75°C, typiquement inférieure à 50°C, comme par exemple la température ambiante ou une température comprise entre 10°C et 30°C. En particulier, la température initiale est de préférence inférieure à la température de frittage. L'utilisation du pressage à chaud dans la fabrication d'une pile à combustible à oxyde solide en un cycle thermique unique permet d'obtenir un empilement de cellules élémentaires complet et monobloc, c'est-à-dire ayant sa propre intégrité.

Selon un des modes de réalisation, la fabrication d'un empilement de cellules élémentaires séparées par des couches d'interconnecteur est facilitée par le pressage de produits céramiques crus. On entend classiquement par « produits céramiques crus », des produits n'ayant pas subi de traitement thermique, comme par exemple un frittage, visant à augmenter leur densité jusqu'à parfois densification complète.

Le pressage à chaud des différents composants des cellules élémentaires se présentant sous forme de couches et des couches d'interconnecteurs peut donc être réalisé sur des produits crus, comme par exemple des poudres mises en forme. La complète densification, ou frittage, des différentes couches composant l'empilement de cellules élémentaires, y compris les couches d'interconnecteur céramique en un seul cycle thermique d'un procédé de pressage à chaud permet d'améliorer l'efficacité du procédé de fabrication d'un tel empilement.

Selon un mode de réalisation, après fabrication complète, la couche d'interconnecteur céramique présente une structure dense, telle que la porosité dans cette couche est inférieure à 5% en volume. En conséquence, la porosité de la couche d'interconnecteur céramique peut être inférieure, comme par exemple inférieure à 3% en volume, par exemple inférieure à 2% en volume, ou inférieure à 1 % en volume.

De plus, après réalisation de l'étape de pressage à chaud, l'épaisseur de la couche d'interconnecteur formée est généralement comprise entre 10 et 1000 microns, voire entre 10 et 200 microns, ou même inférieure à 100 microns. Selon un mode de réalisation, l'épaisseur de la couche d'interconnecteur céramique est inférieure à 75 microns, par exemple inférieure à 50 microns, inférieure à 40 microns, inférieure à 30 microns, ou inférieure à 20 microns. La couche d'interconnecteur peut notamment être plane.

Un empilement d'une pile à combustible à oxyde solide peut donc être fabriqué par une technique de pressage à chaud, comme décrit ci-dessus, avec une ou plusieurs électrode(s) formées à partir d'une poudre de grains de forme allongée selon l'invention. L'empilement de la pile à combustible à oxyde solide peut être composé de deux, trois, quatre, cinq, six, voire plus de 6 cellules élémentaires, une couche d'interconnecteur séparant chaque cellule élémentaire et assurant la connexion électrique, chaque cellule élémentaire étant composée d'une première couche d'électrode, d'une couche d'électrolyte et d'une seconde couche d'électrode.

### EXEMPLES

Les exemples non limitatifs suivants sont donnés dans le but d'illustrer l'invention.

La poudre de l'exemple 1 a été réalisée suivant un procédé de l'invention, à savoir:
a) obtention d'un corps massif de pérovskite de [lanthane dopé au strontium]-manganèse par fusion dans un four à arc ;
b) concassage du corps massif obtenu en a) afin d'obtenir des particules concassées ;
c) tamisage des particules concassées obtenues en b) de façon à obtenir des particules tamisées présentant une taille supérieure à 150 um ;
d) broyage des particules tamisées en c) dans un broyeur à rouleaux de modèle BLC 200x200 fabriqué par la Société CLERO, de façon à obtenir une poudre ;
e) tamisage de la poudre obtenue en d) au tamis de 53 microns et au tamis de 20 microns, et sélection de la fraction comprise entre ces deux tamis ;
f) pas d'étape de déferrage f)
g) vérification du facteur de forme d'un échantillonnage de grains de la poudre obtenue en e).

La poudre de l'exemple comparatif 1 a été fabriquée dans le but de mettre en évidence l'influence de la distribution du facteur de forme sur la porosité totale et la résistance en flexion biaxiale d'un corps poreux réalisé à partir de cette poudre.

La poudre de l'exemple comparatif 1 a été fabriquée suivant le procédé décrit pour la fabrication de la poudre de l'exemple 1, avec les différences suivantes :
- à l'étape a), des particules de pérovskite de [lanthane dopé au strontium] -manganèse ont été obtenues par soufflage d'une composition fondue dans un four à arc ;
- pas d'étape b) ;
- à l'étape c), tamisage des particules obtenues en a) de façon à sélectionner les particules présentant une taille inférieure à 100 µm ;
- pas d'étape d) ;
- étapes e), f) et g) inchangées.

Les particules ainsi obtenues ne différent de celles de la poudre de l'exemple 1 que par une distribution du facteur de forme R différente, les courbes de répartition granulométrique des deux exemples étant sensiblement similaires. Les particules de la poudre de l'exemple comparatif 1 sont plus sphériques que celle de la poudre de l'exemple 1.

Les caractéristiques des poudres obtenues figurent dans le tableau 1 suivant :

**Tableau 1**

| Exemple | Matière constituant, pour plus de 99%, la poudre | % de grains présentant un facteur de forme > 1,5 | % de grains présentant un facteur de forme > 2 | D₁₀ (µm) | D₅₀ (µm> | D₉₀ (µm) | D_{99,5} (µm) |
|---|---|---|---|---|---|---|---|
| Exemple comparatif 1 | (La₀,₈₀₅ Sr₀,₁₉₅)_{0,97}MnO₃-_{δ} | 32 | 9 | 31 | 52 | 89 | 175 |
| 1 | (La_{0,79}Sr_{0,2}1)_{0,96}MnO_{3-δ} | 65 | 28 | 21 | 37 | 76 | 175 |

Les teneurs en impuretés de ces deux poudres figurent dans le tableau 2 suivant :

**Tableau 2**

| Exemple | ZrO₂ | Al₂O₃ | CaO | BaO | Na₂O | Fe₂O₃ | SiO₂ | C | O₃ |
|---|---|---|---|---|---|---|---|---|---|
| Exemple comparatif 1 | 0,14% | <0,02% | <0,05% | 0,05% | <0,05% | 0,02% | 0,09% | 0,004% | 0,007% |
| 1 | 0,08% | <0,02% | 0,12% | 0,07% | <0,05% | 0,03% | <0,02% | 0,0075% | 0,0045% |

Des disques poreux de 28 mm de diamètre et de 3 mm d'épaisseur ont ensuite été réalisés à partir de la poudre de l'exemple 1 (poudre de l'invention) et à partir de la poudre de l'exemple comparatif 1 (hors invention) par pressage à froid uni axial à une pression de 69 MPa. Les disques ainsi obtenus ont ensuite subi un pressage à chaud sous air à 1380°C, avec une pression maximale de 3 MPa appliquée pendant 2 minutes.

Les réactivités de surface des deux poudres sont sensiblement identiques, ce qui permet de s'affranchir de l'impact éventuel de ce paramètre sur les résultats mesurés sur les disques poreux fabriqués.

Le tableau 3 donne les résultats des mesures, effectuées sur les disques poreux obtenus, de la résistance mécanique en flexion biaxiale (biaxial flexure strength) mesurée suivant la norme ASTM C1499-05 et de la porosité totale mesurée par la méthode de la poussée d'Archimède :

**Tableau 3**

| Disque poreux obtenu à partir de la poudre de : | Porosité totale en % | Résistance mécanique en flexion biaxiale en MPa |
|---|---|---|
| l'exemple comparatif 1 | 34,9 | 12,8 |
| l'exemple 1 | 32,2 | 24,8 |

Les exemples montrent que, de façon surprenante, l'utilisation d'une poudre présentant au moins 40% en nombre de grains ayant un facteur de forme supérieur à 1,5 et un percentile 10, D₁₀ supérieur à 4 microns, permet de fabriquer un disque poreux présentant une résistance mécanique en flexion biaxiale 1,9 fois supérieure à celle d'un disque poreux obtenu à partir d'une poudre ne présentant pas ces caractéristiques, les deux disques poreux présentant une porosité totale du même ordre de grandeur.

Ces exemples montrent également qu'une poudre de LSM selon l'invention, contenant des grains de forme allongée, est parfaitement adaptée pour fabriquer une cathode de pile à combustible à oxyde solide présentant une porosité totale adaptée et une résistance mécanique remarquable.

La poudre de l'exemple 2 a été réalisée suivant un procédé de l'invention, à savoir :
a) obtention de billes creuses de pérovskite de [lanthane dopé au strontium]-manganèse de composition (La_{0,805}Sr_{0,2})_{0.96}MnO_{3-δ} par soufflage d'une composition fondue dans un four à arc ;
b) avantageusement, pas d'étape b) ;
c) tamisage des billes creuses obtenues en a) de façon à sélectionner les billes correspondant au refus au tamis de mailles carrées de 100 microns et au passant au tamis de mailles carrées de 500 microns ;
d) broyage des billes tamisées en c) dans un broyeur planétaire rapide du type PM400 de la marque RETSCH. Sont ajoutés dans un bol de contenance 145 ml revêtu d'alumine, 67,5 g de billes à broyer, 6 boulets cylindriques de zircone-magnésie de masse unitaire 7,4 g, de diamètre 12,5 mm et de hauteur 13 mm. Le bol est refermé et mis en rotation pendant 1 minute (mouvement planétaire) à 300 tr/min avec inversion du sens de rotation toutes les minutes, de façon à obtenir une poudre ;
e) tamisage de la poudre obtenue en d) au tamis de 53 microns et au tamis de 20 microns, et sélection de la fraction comprise entre ces deux tamis ;
f) pas d'étape f)
g) vérification du facteur de forme d'un échantillonnage de grains de la poudre obtenue en e).

La poudre de l'exemple 2 ainsi obtenue présente les caractéristiques suivantes :
- un D₁₀ égal à 14,1 microns ;
- un D₅₀ égal à 43,1 microns ;
- un D₉₀ égal à 71,4 microns ;
- un D_{99,5} égal à 120 microns ;
- 67,9% de grains, en nombre, présentent un facteur de forme R > 1,5 ;
- 30,1 % de grains, en nombre, présentent un facteur de forme R > 2.

La poudre de l'exemple 3 a été réalisée suivant un procédé identique au procédé utilisé pour fabriquer la poudre de l'exemple 2 excepté le temps de broyage à l'étape d) réglé à 5 minutes.

La poudre de l'exemple 3 ainsi obtenue présente les caractéristiques suivantes :
- un D₁₀ égal à 10,1 microns ;
- un D₅₀ égal à 36,2 microns ;
- un D₉₀ égal à 64,9 microns ;
- un D_{99.5} égal à 110 microns ;
- 64,3% de grains, en nombre, présentent un facteur de forme R > 1,5 ;
- 24,4% de grains, en nombre, présentent un facteur de forme R > 2.

Bien entendu, la présente invention n'est pas limitée aux modes de réalisation décrits, fournis à titre illustratif.

## Revendications

1. Poudre constituée par un ensemble de grains et constituée pour plus de 90 % en pourcentage massique, en une matière choisie parmi un pérovskite de manganèse, un pérovskite de lanthane, un mélange de pérovskite de manganèse et de pérovskite de lanthane, un pérovskite de lanthane - cobalt (LaCoO₃), un pérovskite de lanthane - fer (LaFeO₃), un pérovskite de lanthane - manganèse (LaMnO₃), un pérovskite de praséodyme - manganèse, un colbatite de samarium dopé au strontium, un nickelate de lanthanides, un mélange de bismuth de ruthénium et de bismuth d'erbium, un mélange de pérovskite de lanthane - zircone cubique, une chromite, un titanate de lanthane, un titanate de [strontium dopé au niobium], un titanate de [strontium dopé à l'yttrium], un chromo - manganite de [lanthane dopé au strontium], une zircone (ZrO₂) monoclinique, une zircone (ZrO₂) partiellement stabilisée, une zircone (ZrO₂) cubique, de l'oxyde de cérium (CeO₂), de l'oxyde de cérium (CeO₂) dopé à l'oxyde de samarium (Sm₂O₃) et/ou à l'oxyde de gadolinium (Gd₂O₃), un cermet comportant de l'oxyde de cérium (CeO₂), un cermet comportant de la chromite de [lanthane dopé au strontium], un cermet comportant de la zircone (ZrO₂) partiellement stabilisée, un cermet comportant de la zircone (ZrO₂) cubique, ou en un mélange de ces matières, ladite poudre étant **caractérisée en ce que** le percentile 10, noté D₁₀, de la répartition granulométrique cumulée des tailles des grains, les tailles de grains étant classées par taille croissante, est supérieur ou égal à 4 µm, au moins 40 % en nombre desdits grains présentant un facteur de forme (R) supérieur à 1,5, le facteur de forme (R) d'un grain étant le rapport entre la longueur et la largeur dudit grain.

2. Poudre selon la revendication 1, lesdits grains étant en un matériau conducteur électrique ou semi-conducteur.

3. Poudre selon l'une quelconque des revendications précédentes, au moins 60 % en nombre des grains présentant un facteur de forme supérieur à 1,5.

4. Poudre selon l'une quelconque des revendications précédentes, le percentile 10 (D₁₀) étant supérieur à 6 µm et inférieur à 50 µm.

5. Poudre selon l'une quelconque des revendications précédentes, dans laquelle
- D₁₀ est supérieur à 8 µm et inférieur à 30 µm, et/ou
- D₅₀ est supérieur à 10 µm et inférieur à 100 µm, et/ou
- D₉₀ est supérieur à 30 µm et inférieur à 150 µm, et/ou
- D_{99,5} est inférieur à 200 µm,
où D₅₀, D₉₀ et D_{99,5} désignent les percentiles 50, 90 et 99,5 de ladite répartition granulométrique cumulée.

6. Poudre selon la revendication précédente, dans laquelle
- D₁₀ est inférieur à 20 µm, et/ou
- D₅₀ est supérieur à 20 µm et inférieur à 50 µm, et/ou
- D₉₀ est supérieur à 40 µm et inférieur à 80 µm, et/ou
- D_{99,5} est inférieur à 150 µm.

7. Poudre selon la revendication précédente, dans laquelle
- moins de 90 % des grains présentent un facteur de forme supérieur à 1,5 et/ou
- au moins 10 % et moins de 60 % des grains de la poudre présentent un facteur de forme supérieur à 2, et/ou
- au moins 5 % et moins de 40 % des grains présentent un facteur de forme supérieur à 2,5, et/ou
- au moins 2 % et moins de 20 % des grains présentent un facteur de forme supérieur à 3, les pourcentages étant des pourcentages en nombre.

8. Poudre selon l'une quelconque des revendications précédentes constituée, pour plus de 90 %, en pourcentage massique, en une matière choisie parmi un pérovskite de lanthane - manganèse codopé de formulation La_{1-x-w} (Ca)_{0,2} (Ce)_{w+z} (Mn)_{1-y} (Ms2)_{y} O₃ avec Ms2 sélectionné parmi le nickel (Ni) et/ou le chrome (Cr) et/ou le magnésium (Mg) et x =0,2, 0,1 <w<0,2 ; 0,03<y<0,2 et 0<z< 0,005, un pérovskite de [lanthane dopé au strontium et/ou au calcium]-manganèse de formule (La₍₁₋ₓ₎Mₓ)_{(1-y)}MnO_{3-δ} avec M choisi dans le groupe composé du strontium, du calcium et de leurs mélanges, 0<x <0,5 et -0,1≤y ≤0,24 et δ permettant d'assurer l'électroneutralité, une chromite de lanthane (LaCrO₃), une zircone partiellement stabilisée à l'oxyde d'yttrium (Y₂O₃) et/ou à l'oxyde de scandium (S_{C2}O₃) et/ou à l'oxyde de cérium (CeO₂), une zircone cubique, un cermet comportant de l'oxyde de cérium (CeO₂) dopé à l'oxyde de samarium (Sm₂O₃) et/ou à l'oxyde de gadolinium (Gd₂O₃), un cermet comportant de la zircone (ZrO₂) partiellement stabilisée à l'oxyde d'yttrium (Y₂O₃), un cermet comportant de la zircone cubique stabilisée à l'oxyde d'yttrium (Y₂O₃), ou en un mélange de ces matières.

9. Poudre selon la revendication précédente, ladite matière choisie étant un pérovskite de [lanthane dopé au strontium]-manganèse de formule (La_{0,8}Sr_{0,2})_{(1-y)}MnO_{3-δ} avec (0≤y≤0,1) et δ permettant d'assurer l'électroneutralité.

10. Poudre selon l'une quelconque des revendications précédentes constituée par des grains fondus.

11. Mélange constitué d'une première poudre selon l'une quelconque des revendications précédentes en un premier matériau et d'une deuxième poudre en un deuxième matériau différent dudit premier matériau, la teneur de la première poudre étant supérieure ou égale à 30%, en poids du mélange,
la première poudre étant une poudre de zircone dopée à l'oxyde d'yttrium et la deuxième poudre étant une poudre d'oxyde de nickel.

12. Produit fritté obtenu par un procédé comportant une mise en forme d'une poudre selon l'une quelconque des revendications 1 à 10 ou d'un mélange particulaire selon la revendication précédente.

13. Cellule élémentaire d'une pile à combustible à oxyde solide comprenant
i) une cathode destinée à être en contact avec une source d'oxygène sous forme gazeuse,
ii) une anode destinée à être en contact avec une source de combustible gazeux, et
iii) un électrolyte disposé entre la cathode et l'anode,
au moins une desdites cathode et anode comportant un produit fritté selon la revendication précédente.

14. Procédé de fabrication d'une poudre comportant les étapes suivantes :
a) Synthèse d'un corps massique par frittage, frittage sous pression, pressage isostatique à chaud, SPS ou fusion ;
b) Optionnellement, réduction dudit corps massique en un ensemble de particules;
c) Sélection des particules présentant une taille supérieure à la taille maximale des grains de la poudre à fabriquer ;
d) Broyage des particules sélectionnées à l'étape c), éventuellement déferrage et/ou éventuellement sélection des grains broyés, de manière à obtenir une poudre selon l'une quelconque des revendications 1 à 10,
procédé dans lequel, pour fabriquer une poudre capable de traverser un tamis de maille carrée d'ouverture 02, on sélectionne à l'étape c) des particules ne passant pas à travers un tamis de maille carrée d'ouverture O1 et passant à travers un tamis de maille carrée d'ouverture 03, O1 étant supérieur à 02 et 03 étant inférieur à cent fois 02.

15. Procédé selon la revendication précédente, dans lequel 03 est inférieur à quatre fois 02.

16. Procédé selon l'une quelconque des revendications 14 à 15, dans lequel, à l'étape d), on utilise un broyeur à rouleaux et on broie des billes creuses.

17. Procédé de fabrication d'une poudre comportant une opération de mélange de :
- une première poudre selon l'une quelconque des revendications 1 à 10 et dont plus 40 % en nombre des grains présentent un facteur de forme (R) supérieur à 1,5, et
- une deuxième poudre présentant un facteur de forme médian (R*) compris entre 1 et 1,3,
la quantité de ladite deuxième poudre étant déterminée de manière que la poudre fabriquée soit conforme à l'une quelconque des revendications 1 à 10.

18. Procédé selon la revendication immédiatement précédente, dans lequel la quantité de ladite deuxième poudre représentant entre 0 et 40% de la masse de la poudre fabriquée, et la deuxième poudre présentant une répartition granulométrique cumulée conforme à celle d'une poudre selon l'une quelconque des revendications 1 à 10.

19. Procédé selon l'une quelconque des deux revendications immédiatement précédentes, dans lequel au moins une desdites première et deuxième poudres présente(nt) une formule chimique du type (La(₁₋ₓ)Mₓ)(_{1-y})MnO_{3-δ} avec M choisi dans le groupe composé du strontium, du calcium et de leurs mélanges, 0<x <0,5) et -0,1 ≤y ≤0,24 et δ permettant d'assurer l'électroneutralité.

20. Procédé de réparation d'une anode ou d'une cathode d'une cellule élémentaire d'une pile à combustible, comportant les étapes successives suivantes :
A) Préparation d'une poudre selon une quelconque des revendications 1 à 10 ou d'un mélange selon la revendication 11 ;
B) Mise en forme de ladite poudre ;
C) Frittage de ladite poudre ainsi mise en forme.

21. Procédé de fabrication d'une cellule élémentaire d'une pile à combustible comprenant les étapes suivantes :
1) fabrication, suivant un procédé selon la revendication précédente, d'une cathode destinée à être en contact avec une source d'oxygène gazeux et d'une anode destinée à être en contact avec un combustible gazeux; et
2) fabrication et mise en place d'un électrolyte entre la cathode et l'anode.

## Patentansprüche

1. Pulver bestehend aus einer Gesamtheit von Körnern zu mehr als 90% in Massenprozenten aus einem Material, welches ausgewählt ist aus einem Manganperovskit, einem Lanthanperovskit, einer Mischung aus Manganperovskit und Lanthanperovskit, einem Lanthan- Kobaltperovskit (LaCoO₃), einem Lanthan-Eisenperovskit (LaFeO₃), einem Mangan-Lanthanperovskit (LaMnO₃), einem Praseodym-Manganperovskit, einem Samarium-Kobaltid dotiert mit Strontium, einem Lanthaniden Nickelat, einer Mischung von Ruthenium-Wismuth und Erbium-Wismuth, einer Mischung von kubischem Lanthan-Zirkonperovskit, einem Chromit, einem Lanthan-Titanat, einem Titanat von [Strontium dotiert mit Niobium], einem Titanat von [Strontium dotiert mit Yttrium], einem Chromo-Manganit von [Lanthan dotiert mit Strontium], einem monoklinischen Zirkonoxyd (ZrO₂), einem teilweise stabilisierten Zirkonoxyd (ZrO₂), einem kubischen Zirkonoxyd (ZrO₂), Zeroxyd (CeO₂), Zeroxyd (CeO₂) dotiert mit Samariumoxyd (Sm₂O₃) und/oder mit Gadoliniumoxyd (Gd₂O₃), einem Cermet, welches Zeroxyd (CeO₂) enthält, einem Cermet, welches Chromit mit [Lanthan dotiert mit Strontium] enthält, einem Cermet, welches teilweise stabilisiertes Zirkonoxyd (ZrO₂) enthält, einem Cermet, welches Zirkonoxyd (ZrO₂) in kubischer Form aufweist, oder aus einer Mischung dieser Materialien, wobei das Pulver **dadurch gekennzeichnet ist, dass** der Prozentsatz 10, genannt D₁₀, der kumulierten granulometrischen Verteilung der Körnergrößen, wobei die Körnergrößen durch zunehmende Größe klassifiziert sind, größer oder gleich 4µm ist, wobei mindestens 40% in der Anzahl der Körner einen Formfaktor (R) aufweisen, der größer als 1,5 ist, wobei der Formfaktor (R) eines Korns das Verhältnis zwischen der Länge und der Größe des Korns ist.

2. Pulver nach Anspruch 1, wobei die Körner aus einem elektrisch leitenden oder halbleitenden Material sind.

3. Pulver nach einem der vorhergehenden Ansprüche, bei dem mindestens 60% in der Anzahl der Körner einen Formfaktor von größer als 1,5 aufweisen.

4. Pulver nach einem der vorhergehenden Ansprüche, bei dem der Prozentsatz 10 (D₁₀) größer als 6µm und kleiner als 50µm ist.

5. Pulver nach einem der vorhergehenden Ansprüche, in welchem
- D₁₀ größer als 8 µm und kleiner als 30 µm ist, und/oder
- D₅₀ größer als 10 µm und kleiner als 100 µm ist, und/oder
- D₉₀ größer als 30 µm und kleiner als 150 µm ist, und/oder
- D_{99,5} kleiner als 200 µm ist, wobei D₅₀, D₉₀ und D_{99,5} die Prozentsätze 50, 90 und 99,5 der kumulierten granulometrischen Verteilung bezeichnen.

6. Pulver nach dem vorhergehenden Anspruch, in welchem
- D₁₀ kleiner als 20 µm, und/oder
- D₅₀ größer als 20 µm und kleiner als 50 µm, und/oder
- D₉₀ größer als 40 µm und kleiner als 80 µm, und/oder
- D_{99,5} kleiner als 150 µm ist.

7. Pulver nach dem vorhergehenden Anspruch, in welchem weniger als 90% der Körner einen Formfaktor größer als 1,5 aufweisen und/oder
- mindestens 10% und weniger als 60% der Körner des Pulvers einen Formfaktor von größer als 2 aufweisen, und/oder
- mindestens 5% und weniger als 40% der Körner einen Formfaktor von größer als 2,5% aufweisen und/oder
- mindestens 2% und weniger als 20% der Körner einen Formfaktor von größer als 3% aufweisen, wobei die Prozente in Anzahlprozenten gemeint ist.

8. Pulver nach einem der vorhergehenden Ansprüche, welches gebildet ist für mehr als 90% in Massenprozenten aus einem Material, welches ausgewählt ist aus einem Lanthan-Manganperovskit codotiert gemäß der Formel La_{1-x-w} (Ca)₀₂ (Ce)_{w+z} (Mn)_{1-y} (Ms2)_{y} O₃ mit Ms2 ausgewählt aus Nickel (Ni) und/oder Chrom (Cr) und/oder Magnesium (Mg) und x=0,2, 0,1<w<0,2; 0,03<y<0,2 und 0<z<0,005, einem Perovskit von [Lanthan dotiert mit Strontium und/oder Kalzium]-Mangan gemäß der Formel
(La(₁₋ₓ)Mₓ)(_{1-y})MnO_{3-δ}
mit M ausgewählt aus einer aus Strontium, Kalzium und deren Mischungen zusammengesetzten Gruppe, wobei 0<x<0,5 und -0,1≤y≤0,24 ist und wobei δ erlaubt die Elektroneutralität zu sichern, einem Lanthanchromit (LaCrO₃), einem Zirkonoxyd, dass teilweise mit Yttriumoxyd stabilisiert ist (Y₂O₃) und/oder mit Scandiumoxyd (Sc₂O₃) und/oder mit Zeroxyd (CeO₂), einem kubischen Zirkonoxyd, einem Cermet, welches Zeroxyd (CeO₂) aufweist, welches mit Samariumoxyd (Sm₂O3) dotiert ist und/oder mit Gadoliniumoxyd (Gd₂O₃), einem Cermet, welches Zirkonoxyd (ZrO₂) beinhaltet, welches teilweise stabilisiert ist mit Yttriumoxyd (Y₂O3) und einem Cermet, welches kubisches Zirkonoxyd aufweist, welches mit Yttriumoxyd (Y₂O₃) stabilisiert ist oder aus einer Mischung dieser Materialien.

9. Pulver nach dem vorhergehenden Anspruch, wobei das ausgewählte Material ein Perovskit von [Lanthan dotiert mit Strontium]-Mangan ist gemäß der Formel (La_{0,8}Sr_{0,2})_{(1-y)}MnO_{3-δ}mit (0≤y≤0,1) und wobei δ die Elektroneutralität absichert.

10. Pulver nach einem der vorhergehenden Ansprüche, welches aus geschmolzenen Körnern besteht.

11. Mischung bestehtend aus einem ersten Pulver gemäß einem der vorhergehenden Ansprüche aus einem ersten Material und einem zweiten Pulver aus einem zweiten vom ersten Material verschiedenen Material, wobei der Anteil des ersten Pulvers größer oder gleich 30% im Mischungsgewicht ist, wobei das erste Pulver ein Zirkonoxydpulver ist, welches mit Yttriumoxyd dotiert ist und das zweite Pulver ein Nickeloxydpulver ist.

12. Gesintertes Produkt, welches gemäß einem Verfahren erhalten wird, bei dem ein Pulver gemäß einem der Ansprüche 1 bis 10 oder eine besondere Mischung gemäß dem vorhergehenden Anspruch geformt wird.

13. Festoxydbrennstoffzelle mit:
i) einer Kathode, die dazu bestimmt ist, mit einer Quelle von Sauerstoff in Gasform in Kontakt zu sein,
ii) einer Anode, die dazu bestimmt ist, mit einer Quelle von brennbaren Gasen in Kontakt zu sein und
iii) einem Elektrolyt, der zwischen der Kathode und der Anode vorgesehen ist,
wobei mindestens eine dieser Kathode und Anode ein gesintertes Produkt gemäß dem vorhergehenden Anspruch aufweist.

14. Herstellungsprozess eines Pulvers mit den folgenden Verfahrensschritten:
a) Synthese eines Massenkörpers durch Sinterung, Sinterung unter Druck, durch isostatischen Druck bei Wärme, SPS oder Schmelzen;
b) optional Reduktion des Massenkörpers in eine Gesamtheit von Teilchen;
c) Abtrennung der Teilchen, die eine Größe aufweisen, die größer als die maximale Größe der Körner des herzustellenden Pulvers ist;
d) mahlen der in Schritt c) selektionierten Teilchen, eventuell Entfernung und/oder eventuell Selektion der gemahlenen Körner, um ein Pulver gemäß einem der Ansprüche 1 bis 10 zu erhalten,
wobei in dem Verfahren, um ein Pulver herzustellen, welches fähig ist, ein quadratich gewirktes Sieb mit der Öffnungsweite 02 zu durchlaufen, man in Schritt c) Teilchen selektioniert, die nicht durch ein quadratisch gewirktes Sieb mit der Öffnung O1 passen und durch ein quadratisch gewirktes Sieb der Öffnungsweite 03 passen, wobei 01 größer als 02 und 03 kleiner als 100 mal 02 ist.

15. Verfahren nach dem vorhergehenden Anspruch, in welchem 03 kleiner als viermal 02 ist.

16. Verfahren nach einem der Ansprüche 14 bis 15, in welchem in Schritt d) eine Walzenmühle gebraucht wird und man Hohlkugeln mahlt.

17. Herstellungsverfahren eines Pulvers mit einem Mischvorgang:
- eines ersten Pulvers gemäß einem der Ansprüche 1 bis 10 und von dem 40% der Körneranzahl einen Formfaktor (R) größer als 1,5 aufweisen und
- einem zweiten Pulver, welches einen mittleren Formfaktor (R*) aufweist, der zwischen 1 und 1,3 liegt,
wobei die Menge des zweiten Pulvers derart bestimmt wird, dass das hergestellte Pulver mit einem der Ansprüche 1 bis 10 konform ist.

18. Verfahren nach dem vorhergehenden Anspruch, in welchem die Menge des zweiten Pulvers zwischen 0 und 40% der Masse des hergestellten Pulvers liegt und das zweite Pulver eine kumulierte granulometrische Verteilung aufweist, die mit derjenigen eines Pulvers nach einem der Ansprüche 1 bis 10 konform ist.

19. Verfahren nach einem der beiden vorhergehenden Ansprüche, in welchem mindestens eines des ersten oder zweiten Pulvers eine chemische Formel des Typs (La₍₁₋ₓ₎Mₓ)_{(1-y)}MnO_{3-δ} aufweist mit ausgewählt aus der Gruppe, die sich zusammensetzt aus Strontium, Kalzium und deren Mischungen, 0<x<0,5 und -0,1≤y≤0,24 und wobei δ die Elektroneutralität sichert.

20. Verfahren zur Herstellung einer Anode oder einer Kathode einer Brennstoffzelle mit den folgenden aufeinanderfolgenden Schritten:
A) Bereiten eines Pulvers nach einem der Ansprüche 1 bis 10 oder einer Mischung nach dem Anspruch 11;
B) Formen des Pulvers;
C) Sinterung des geformten Pulvers.

21. Herstellungsverfahren einer Brennstoffzelle, welches folgende Schritte aufweist:
1) Herstellung nach einem Verfahren gemäß dem vorhergehenden Anspruch einer Kathode, die dazu bestimmt ist, in Kontakt mit einer Quelle von gasförmigem Sauerstoff zu sein und einer Anorde, die bestimmt ist, in Kontakt mit einem brennbaren Gas zu sein; und
2) Herstellung und Plazieren eines Elektrolythen zwischen der Kathode und der Anode.

## Claims

1. A powder constituted by a set of grains, constituted, for more than 90% as a percentage by weight, by a substance selected from a manganese perovskite, a lanthanum perovskite, a mixture of manganese perovskite and lanthanum perovskite, a lanthanum - cobalt perovskite (LaCoO3), a lanthanum - iron perovskite (LaFeO₃), a lanthanum - manganese perovskite (LaMnO₃), a praseodymium - manganese perovskite, a strontium-doped samarium cobaltite, a lanthanide nickelate, a mixture of ruthenium bismuth and erbium bismuth, a mixture of lanthanum- cubic zirconia perovskite, a chromite, a lanthanum titanate, a [niobium-doped strontium] titanate, a [yttrium-doped strontium] titanate, a [strontium-doped lanthanum] chromo-manganite, a monoclinic zirconia (ZrO₂), a partially stabilized zirconia (ZrO₂), a cubic zirconia (ZrO₂), cerium oxide (CeO₂), cerium oxide (CeO₂) doped with samarium oxide (Sm₂O₃) and/or gadolinium oxide (Gd₂O3), a cermet comprising cerium oxide (CeO₂), a cermet comprising [strontium-doped lanthanum] chromite, a cermet comprising partially stabilized zirconia (ZrO₂), a cermet comprising cubic zirconia (ZrO₂), or by a mixture of said substances, said powder being **characterized in that** the 10 percentile, denoted D₁₀, of the cumulative granulometric distribution of the grain sizes, the grain sizes being classified by increasing size, is 4 µm or more, at least 40% by number of said grains having a form factor (R) of more than 1.5, the form factor (R) of a grain being the ratio between the length and the width of said grain.

2. A powder according to claim 1, said grains being formed from an electrically conductive or semiconductive material.

3. A powder according to any one of the preceding claims, at least 60% by number of the grains having a form factor of more than 1.5.

4. A powder according to any one of the preceding claims, the 10 percentile (D_{10µ}) being more than 6 µm and less than 50 µm.

5. A powder according to any one of the preceding claims, wherein
• D₁₀ is more than 8 µm and less than 30 µm; and/or
• D₅₀ is more than 10 µm and less than 100 µm; and/or
• D₉₀ is more than 30 µm and less than 150 µm; and/or
• D_{99.5} is less than 200 µm;
where D₅₀, D₉₀ and D_{99.5} denote the 50, 90, and 99.5 percentiles of said cumulative granulometric distribution.

6. A powder according to the preceding claim, wherein
• D₁₀ is less than 20 µm; and/or
• D₅₀ is more than 20 µm and less than 50 µm; and/or
• D₉₀ is more than 40 µm and less than 80 µm; and/or
• D_{99.5} is less than 150 µm.

7. A powder according to the preceding claim, wherein
• less than 90% of the grains have a form factor of more than 1.5; and/or
• at least 10% and less than 60% of the grains of the powder have a form factor of more than 2; and/or
• at least 5% and less than 40% of the grains have a form factor of more than 2.5; and/or
• at least 2% and less than 20% of the grains have a form factor of more than 3; the percentages being percentages by number.

8. A powder according to any one of the preceding claims constituted, for more than 90% as a percentage by weight, by a substance selected from a co-doped lanthanum perovskite - manganese with formulation La_{1-x-w} (Ca)_{0.2} (Ce)_{w+z} (Mn)_{1-y} (Ms2)_{y} O₃ where Ms2 is selected from nickel (Ni) and/or chromium (Cr) and/or magnesium (Mg) and x = 0.2, 0.1 < w <0.2; 0.03 < y < 0.2 and 0 < z < 0.005, a [strontium and/or calcium-doped lanthanum]-manganese perovskite with formula (La(₁₋ₓ)Mx)(_{1-y})MnO_{3-δ} where M is selected from the group composed of strontium, calcium and mixtures thereof, 0 < x < 0.5 and -0.1 ≤y ≤ 0.24 and δ ensures electroneutrality, a lanthanum chromite (LaCrO₃), a zirconia partially stabilized with yttrium oxide (Y₂O₃) and/or scandium oxide (Sc₂O₃) and/or cerium oxide (CeO₂), a cubic zirconia, a cermet comprising cerium oxide (CeO₂) doped with samarium oxide Sm₂O₃) and/or gadolinium oxide (Gd₂O₃), a cermet comprising zirconia (ZrO₂) partially stabilized with yttrium oxide (Y₂O₃), a cermet comprising cubic zirconia stabilized with yttrium oxide (Y₂O₃), or by a mixture of said substances.

9. A powder according to the preceding claim, said selected substance being a [strontium-doped lanthanum]-manganese perovskite with formula (La_{0.8}Sr_{0.2})(_{1-y})MnO_{3-δ} where (0≤y≤0.1) and δ ensures electroneutrality.

10. A powder according to any one of the preceding claims, constituted by fused grains.

11. A mixture constituted by a first powder according to any one of the preceding claims formed from a first material and a second powder formed from a second material that is different from said first material, the quantity of the first powder being 30% or more by weight of the mixture, the first powder being a zirconia powder doped with yttrium oxide and the second powder being a nickel oxide powder.

12. A sintered product obtained by a method comprising shaping a powder according to any one of claims 1 to 10 or a particulate mixture according to the preceding claim.

13. An elementary cell of a solid oxide fuel cell, comprising:
i) a cathode intended to be in contact with a source of oxygen in the gaseous form;
ii) an anode intended to be in contact with a source of gaseous fuel; and
iii) an electrolyte disposed between the cathode and the anode;
at least one of said cathode and anode comprising a sintered product according to the preceding claim.

14. A method of producing a powder, comprising the following steps:
a) synthesizing a solid body by sintering, isostatic sintering, hot isostatic pressing, SPS, or fusion;
b) optionally, reducing said solid body into a set of articles;
c) selecting particles with a size greater than the maximum size of the grains of the powder to be produced;
d) milling the particles obtained from step c), optional de-ironing and/or optional selection of the milled grains, to obtain a powder according to any one of claims 1 to 10,
method wherein, in order to produce a powder capable of passing through a square mesh screen with a mesh size of 02, in step c) particles that do not pass through a square mesh screen with mesh size O1 and that pass through a square mesh screen with a mesh size of 03 are selected, O1 being greater than 02 and 03 being less than a hundred times 02.

15. A method according to the preceding claim, wherein 03 is less than four times 02.

16. A method according to any one claims 14 to 15 wherein, in step d), a roller grinding mill is used, and hollow beads are milled.

17. A method of producing a powder comprising an operation of mixing:
• a first powder according to any one of claims 1 to 10 wherein more than 40% by number of the grains have a form factor (R) of more than 1.5; and
• a second powder with a median form factor (R*) in the range 1 to 1.3; the quantity of said second powder being determined such that the powder that is manufactured is in accordance with any one of claims 1 to 10.

18. A method according to the immediately preceding claim, wherein the quantity of said second powder represents between 0 and 40% of the weight of the manufactured powder, and the second powder presents a cumulative granulometric distribution in accordance with that of a powder according to any one of claims 1 to 10.

19. A method according to the two immediately preceding claims, wherein at least one of said first and second powders has (have) a chemical formula of the type (La(₁₋ₓ)Mx)(_{1-y)}MnO_{3-δ} with M selected from the group composed of strontium, calcium and mixtures thereof, (0 < x< 0.5) and (-0.1 ≤ y ≤ 0.24) and δ ensures electroneutrality.

20. A method for preparing an anode or a cathode of an elementary cell of a fuel cell, comprising the following steps in succession:
A) preparing a powder according to any one of claims 1 to 10 or a mixture according claim 11;
B) shaping said powder to obtain a shaped powder;
C) sintering said shaped powder.

21. A method for producing an elementary cell of a fuel cell, comprising the following steps in succession:
1) producing, using a method according to claim 51, a cathode intended to be in contact with a source of gaseous oxygen and an anode intended to be in contact with a gaseous fuel; and
2) producing and positioning an electrolyte between the cathode and the anode.
